# EUROPÄISCHE PATENTSCHRIFT

(11) **EP 0 945 333 B1**
(45) Veröffentlichungstag und Bekanntmachung des Hinweises auf die Patenterteilung: **27.12.2006**
(21) Anmeldenummer: 99105075.8
(22) Anmeldetag: 23.03.1999
(51) Int. Cl.: B62K 11/02, B62K 3/02, B62K 19/00, G01B 11/275, G01B 11/26, G01B 5/00

(54) **Verfahren und Vorrichtung zum Vermessen eines Zweiradrahmens**
Method and device for measuring the frame of a two wheeled vehicle
Procédé et dispositif pour mesurer le cadre d'un véhicule à deux roues

(30) Priorität: 24.03.1998 DE 19812911
(43) Veröffentlichungstag der Anmeldung: 29.09.1999
(73) Patentinhaber: Staudacher, Engelbert, 89358 Kammeltal (DE)
(72) Erfinder: Köster, Gerhard, 87764 Legau (DE)
(74) Vertreter: Klingseisen, Franz

(56) Entgegenhaltungen:
- EP-A- 0 491 369
- DE-A- 4 432 828
- FR-A- 2 753 529

## Beschreibung

Die Erfindung betrifft ein Verfahren und eine Vorrichtung zum Vermessen eines Zweiradrahmens, insbesondere eines Motorradrahmens.

Aus DE 44 32 828 ist es zum Vermessen der Lage einer ersten Achse relativ zu einer zweiten Achse bei einem Motorradrahmen bekannt, zumindest zwei in einem Abstand voneinander auf der Lenkkopfachse angeordnete Meßkörper vorzusehen, die mit wenigstens zwei in einem Abstand voneinander angeordneten Bildaufnehmern zusammenwirken, die an den beiden Ecken eines U-förmigen Bügels angebracht sind, der in der Schwingenaufnahme des Motorradrahmens zentriert wird. Das Verfahren zum Vermessen der Geometrie eines Motorradrahmens mit einer solchen Vorrichtung ist aufwendig und die hierfür erforderliche Vorrichtung ist entsprechend teuer.

Der Erfindung liegt die Aufgabe zugrunde, ein Verfahren und eine Vorrichtung der eingangs angegebenen Art so auszubilden, daß mit einfachen und kostengünstigen Mitteln ein Zweiradrahmen in einfacher Weise zuverlässig vermessen werden kann.

Diese Aufgabe wird erfindungsgemäß durch die Merkmale in den Ansprüchen 1 und 12 gelöst. Dadurch, daß am Lenkkopf nur ein einfacher Reflektor angebracht zu werden braucht, der wahlweise unabhängig vom Lenker um die Lenkkopfachse verschwenkbar oder mit dem Lenker verschwenkbar ist, während am Querbalken eines an der Schwingenaufnahme des Rahmens zentrierten U-Bügels in der Mitte ein lichtemittierendes Gerät und in einem seitlichen Abstand auf dessen beiden Seiten ein Reflektor angebracht ist, der jeweils in der Höhe verstellbar ist, können trotz des einfachen und kostengünstigen Aufbaus alle wesentlichen Daten für die Rahmengeometrie durch eine Rechnereinrichtung ermittelt werden, welche die Signale von den Meßelementen aufnimmt und verarbeitet.

Das erfindungsgemäße Verfahren besteht im wesentlichen aus einer Dreiecksvermessung zwischen dem Reflektor am Lenkkopf, dem lichtemittierenden Gerät in der Mitte des Bügels und den beiden seitlich angeordneten Reflektoren. Durch diese Dreiecksvermessung kann die für die Rahmengeometrie wesentliche Längsabmessung zwischen Lenkkopf und Schwingenaufnahme bestimmt werden, wie auch der Sturzwinkel der Lenkkopfachse in der Symmetrieebene des Rahmens durch Verschwenken des Reflektors mit dem Lenkkopf sowie auch die Ausrichtung der Symmetrieebene selbst.

Die Erfindung wird beispielsweise anhand der Zeichnung näher erläutert. Es zeigen
- Fig. 1: eine Seitenansicht eines Motorradrahmens mit schematischer Darstellung der wesentlichen Teile der Vorrichtung zum Vermessen,
- Fig. 2: eine Draufsicht auf den Rahmen nach Fig. 1, mit Meßvorrichtung,
- Fig. 3: in einer schematischen, perspektivischen Ansicht die für die Vermessung wesentlichen Elemente der Vorrichtung,
- Fig. 4: in einer Seitenansicht schematisch eine andere Meßanordnung,
- Fig. 5: eine Draufsicht auf die Meßanordnung zur Erläuterung der Sturzmessung,
- Fig. 6: eine Seitenansicht der Meßanordnung nach Fig. 5,

- Fig. 7: eine Draufsicht auf die Meßanordnung zur Erläuterung der Messung der Symmetrieebene,
- Fig. 8: perspektivisch eine Bauform des Reflektors am Lenkkopf

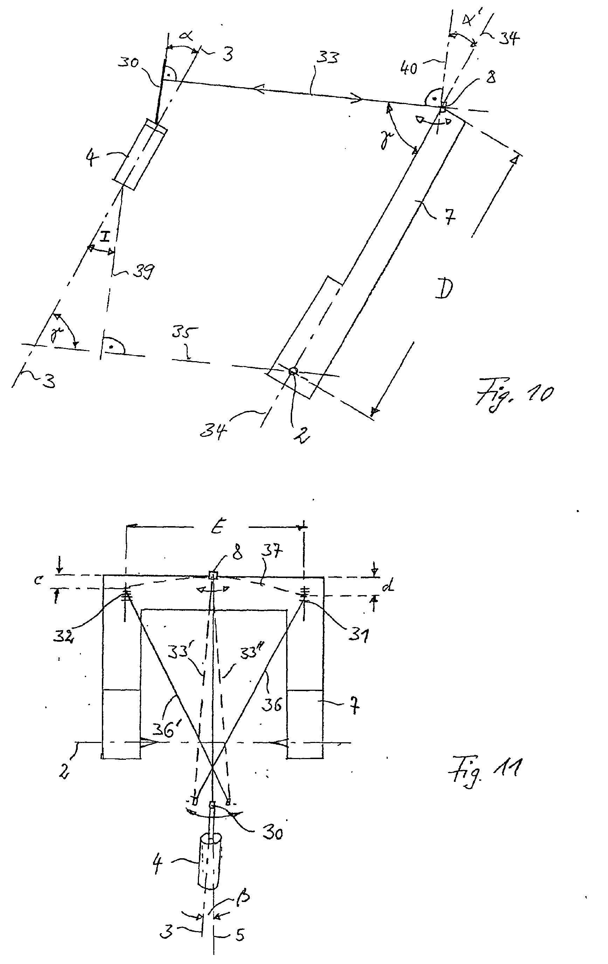

- Fig. 9: ein Zusatzgerät am Bügel,
- Fig. 10: eine Seitenansicht einer anderen Ausführungsform der Meßvorrichtung, und
- Fig. 11: eine perspektivische Ansicht der Meßvorrichtung nach Fig. 10 in einem Blickwinkel von vorne über den Lenkkopf in Richtung auf den Bügel.

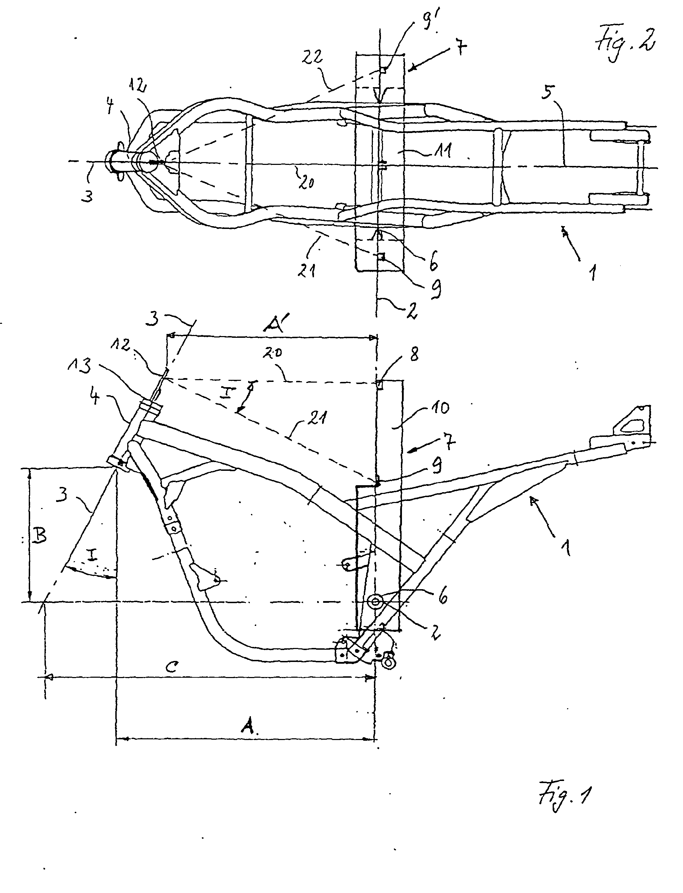

Fig. 1 und 2 zeigen einen Motorradrahmen 1, der zur Erläuterung der Erfindung ohne Anbauten wiedergegeben ist. Die Vermessung kann aber mit der nachfolgend beschriebenen Vorrichtung auch an einem kompletten Motorrad ohne Demontage von Teilen vorgenommen werden.

Fig. 1 zeigt die für die Rahmengeometrie wesentlichen Abmessungen A, B und C sowie den Winkel I, die vom Hersteller vorgegeben sind. Die Längsabmessung A gibt den Abstand zwischen der Schwingenachse 2 und dem Austritt der Lenkkopfachse 3 an der Unterseite des Lenkkopfs 4 an. Die Abmessung B gibt den vertikalen Abstand zwischen Schwingenachse 2 und Austritt der Lenkkopfachse 3 an der Unterseite des Lenkkopfs 4 an. Die Abmessung C ergibt sich aus dem Schnittpunkt der Lenkkopfachse 3 mit der Horizontalen durch die Schwingenachse 2. Durch diese Abmessungen wird der Winkel I der Lenkkopfachse 3 zur Vertikalen vorgegeben. Die angegebenen Abmessungen liegen in der Symmetrieebene 5 des Rahmens 1, in der auch die Längsachse des Rahmens und die Lenkkopfachse 3 liegt, wie Fig. 2 zeigt.

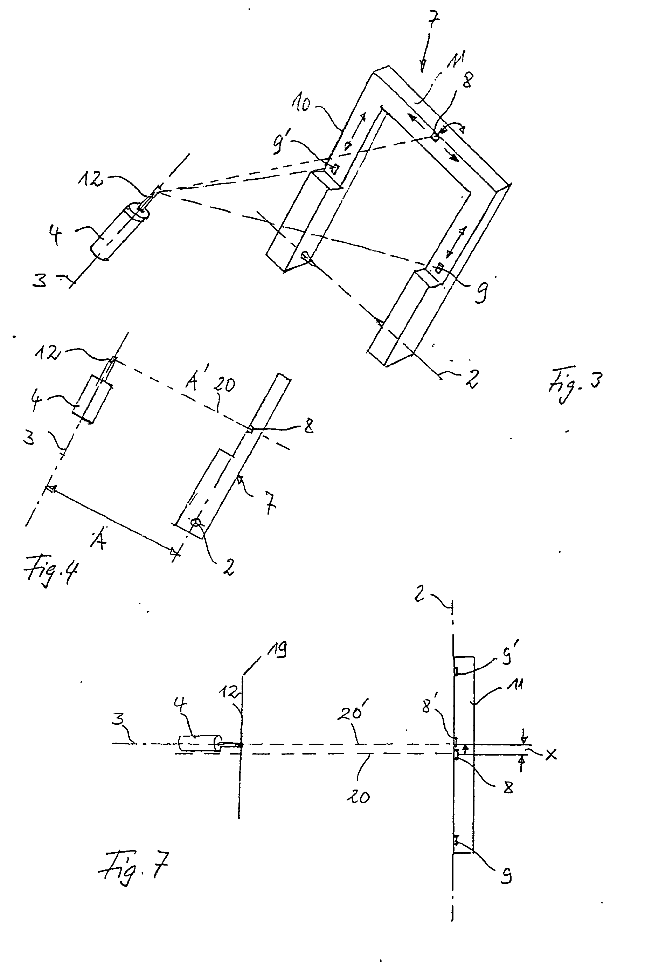

An der Schwingenaufnahme 6 des Rahmens 1 ist in der Schwingenachse 2 ein etwa U-förmiger Bügel 7 mittels Zentrierkegeln zentriert. Auf dem Querbalken 11 des Bügels 7 ist in der Mitte bei dem dargestellten Ausführungsbeispiel ein lichtemittierendes Gerät 8, wie beispielsweise ein Lasergerät, vorzugsweise so angebracht, daß es in der senkrechten Stellung des Bügels 7 in Fig. 1 vertikal über der Schwingenachse 2 liegt. Beiderseits des Lasergeräts 8 sind an dem Bügel Reflektoren 9,9' vorzugsweise in der die Schwingenachse 2 und das Lasergerät 8 einschließenden Ebene angebracht, die über einen Abschnitt längs der Schenkel 10 des Bügels 7 in der Höhe verstellbar sind, wie Fig. 3 durch Pfeile zeigt. Am Lenkkopf 4 des Rahmens 1 ist mittels eines Aufsatzteiles 13 (Fig. 1 und 8) ein Reflektor 12 so angebracht, daß er auf der Lenkkopfachse 3 liegt. Dieser Reflektor 12 kann unabhängig vom nicht dargestellten Lenker des Motorrads verschwenkt werden und auch derart am Lenkkopf festgelegt werden, daß er nur mit dem Lenker des Motorrads verschwenkt werden kann.

Zum Ermitteln der Längsabmessung A (Fig. 1) wird eine Dreiecksvermessung zwischen den seitlich am Bügel angebrachten Reflektoren 9,9' und dem am Lenkkopf 4 angebrachten Reflektor 12 entsprechend den in Fig. 1 und 2 durch gestrichelte Linien angedeuteten Strahlengängen 20 bis 22 vorgenommen. Der am Lenkkopf 4 angebrachte Reflektor 12 wird unabhängig vom Lenker so verdreht, daß der vom Lasergerät 8 ausgesandte Lichtstrahl 20 einmal zum linken und dann zum rechten Reflektor 9 bzw. 9' am Bügel durch die Reflexionsstrahlen 21 bzw. 22 reflektiert wird. Am Aufsatzteil 13, auf dem der Reflektor 12 verdrehbar ist, ist eine Skala 15 zum Messen des Verdrehwinkels des Reflektors 12 vorgesehen. Hierdurch ist der Winkel zwischen den Strahlen 20, 21 und 22 bekannt. Ferner ist der Abstand zwischen den Reflektoren 9, 9' und dem Lasergerät 8 vorgegeben bzw. bekannt. Hieraus kann die Längsabmessung A' zwischen Reflektor 12 am Lenkkopf 4 und Lasergerät 8, das am Bügel 7 in der Vertikalen über der Schwingenachse 2 angebracht ist, entsprechend der Länge des Strahls 20 errechnet werden.

Der Winkel I zwischen den Strahlen 20 und 21 in Fig. 1 entspricht dem Lenkkopfwinkel I. Damit ergibt sich auch der Winkel der Lenkkopfachse 3 zur Vertikalen aus den Strahlengängen in Verbindung mit dem senkrechten Abstand der Reflektoren 9, 9' vom Lasergerät 8 in Fig. 1, der ebenfalls vorgegeben ist.

Der senkrechte Abstand zwischen Schwingenachse 2 und Lasergerät 8 am Bügel 7 ist vorgegeben. Hierdurch kann aus der durch die Dreiecksvermessung ermittelten Längsabmessung A' über den Lenkkopfwinkel I und die sich daraus ergebende Abmessung C und B die Längsabmessung A durch die nicht dargestellte Rechnereinrichtung errechnet werden.

Fig. 4 zeigt den Bügel 7 so um die Schwingenachse 2 verschwenkt, daß der Laserstrahl 20 vom Lasergerät 8 zum Reflektor 12 am Lenkkopf 4 in der Ebene der reflektierten Strahlen 21,22 zu den Reflektoren 9 und 9' liegt, die bei der Anordnung in Fig. 4 auf der Höhe des Lasergeräts 8 liegen. Hierbei ist das Lasergerät 8 in senkrechter Richtung am Bügel 7 nach unten verstellt. Der Abstand A' entspricht damit der Längenabmessung A.

Ein Verschwenken des Bügels 7 nach Fig. 4 ist aber für die Ermittlung von A nicht erforderlich, wie zuvor angegeben.

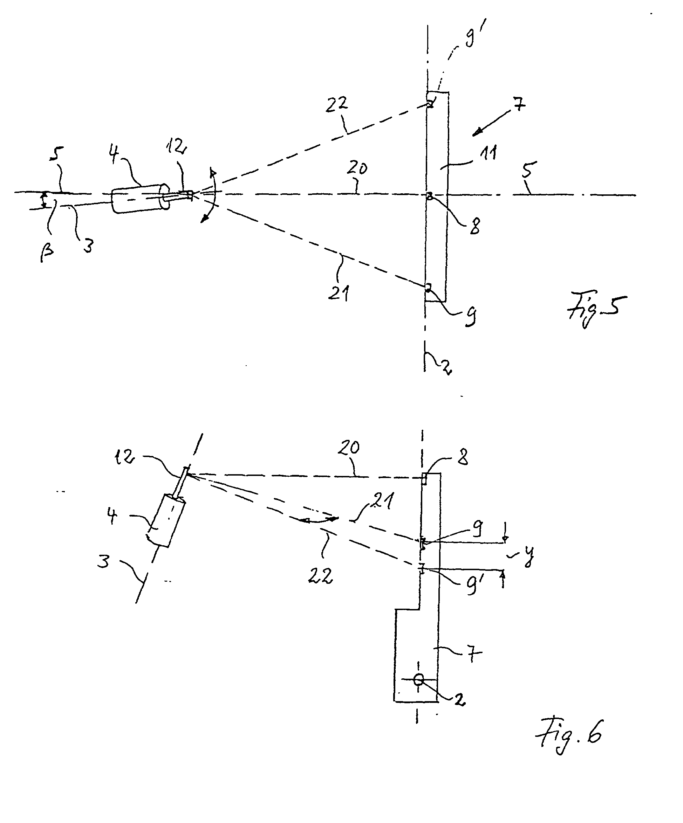

Zum Vermessen des Sturzwinkels, das heißt der Lage der Lenkkopfachse 3 in der Draufsicht nach Fig. 5 relativ zur Symmetrieebene 5, die senkrecht zur Zeichenebene in Fig. 5 liegt, wird der Reflektor 12 am Lenkkopf 4 in eine Nullstellung gebracht, in der der vom Lasergerät 8 ausgehende Lichtstrahl 20 direkt auf das Lasergerät 8 zurück reflektiert wird. Zugleich wird der Reflektor 12 am Lenkkopf 4 derart festgelegt, beispielsweise mittels einer Überwurfmutter oder dergleichen, daß er nur mit dem Lenker des Motorrads verschwenkt werden kann. Danach wird der Reflektor 12 mittels des Lenkers so verschwenkt, daß der vom Lasergerät 8 ausgehende Lichtstrahl 20 über die Strahlen 21 und 22 zu den beiden Reflektoren 9 und 9'an den Seiten des Bügels reflektiert wird, wobei die Reflektoren 9 und 9'in der Höhe längs der Schenkel 10 des Bügels 7 so verstellt werden (siehe Fig. 3), daß der vom Reflektor 12 reflektierte Lichtstrahl 21 bzw. 22 auf den jeweiligen Reflektor 9,9' trifft. Bei einer Sturzabweichung, das heißt einem Winkel β der Lenkkopfachse 3 zur Symmetrieebene 5 in der Draufsicht nach Fig. 5, ergibt sich eine Schwenkebene der vom Reflektor 12 am Lenkkopf 4 reflektierten Lichtstrahlen 21 und 22 nicht senkrecht, sondern schräg zur Symmetrieebene 5, wie dies in Fig. 6 wiedergegeben ist, die eine Seitenansicht der Symmetrieebene 5 wiedergibt, in der die beiden Reflektoren 9 und 9' auf den beiden Seiten des Bügels einen vertikalen Abstand y voneinander haben entsprechend der durch einen Doppelpfeil in Fig. 6 wiedergegebenen Neigung der Schwenkebene der reflektierten Lichtstrahlen 21 und 22 zur Symmetrieebene, die in der Zeichnungsebene der Fig. 6 liegt. Aus diesem Abstand y kann der Sturzwinkel β durch die angeschlossene Datenverarbeitungsanlage ohne weiteres ermittelt werden.

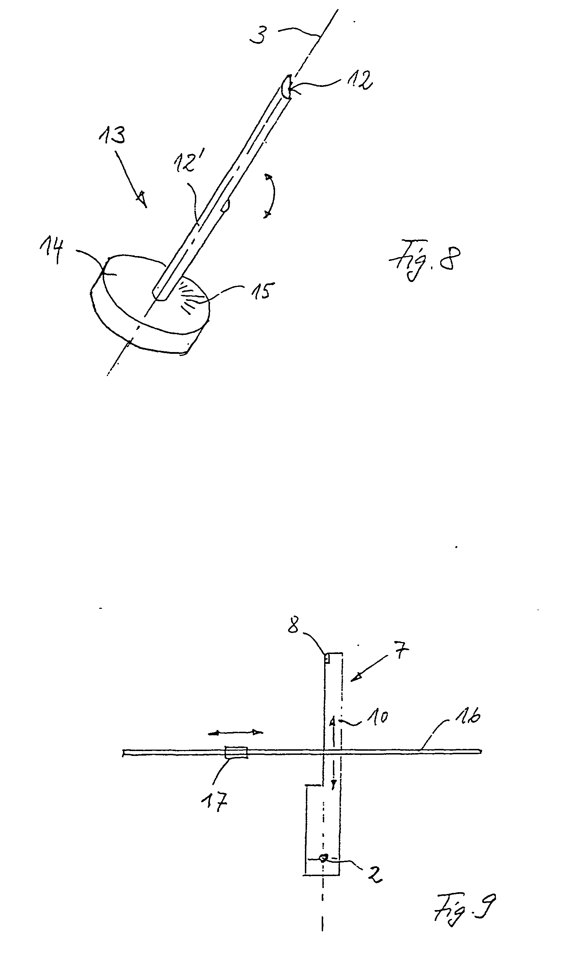

Schließlich kann eine Versetzung der Symmetrieebene 5 eines Unfallrahmens zu der korrekten Lage der Symmetrieebene dadurch festgestellt werden, daß der Reflektor 12 am Lenkkopf 4 in eine Nullstellung gebracht wird, in der die Ebene des Reflektors 12 senkrecht zur Symmetrieebene 5 liegt, wie bei 19 in Fig. 7 angedeutet. Zugleich ist der Reflektor 12 mit einem Fadenkreuz oder einer senkrecht verlaufenden Mittellinie versehen, welche mit der Lenkkopfachse 3 zusammenfällt. Wenn in dieser Nullstellung der vom Lasergerät 8 ausgesandte Lichtstrahl 20 das Fadenkreuz bzw. die Mittellinie des Reflektors 12 am Lenkkopf nicht trifft, sondern wegen einer Versetzung der Symmetrieebene seitlich zur Mittellinie versetzt ist, so kann das Lasergerät 8 seitlich am Querbalken 11 des Bügels 7 verstellt werden, bis der Lichtstrahl 20' mittig auf den Reflektor 12 trifft. Das Maß x der seitlichen Verstellung des Lasergeräts 8 kann mittels einer Maßskala am Bügel oder auf elektronischem Wege gemessen werden und gibt die Versetzung der Symmetrieebene 5 an.

Für die Anbringung des Reflektors 12 am Lenkkopf 4 sind verschiedene Ausführungsformen möglich. Fig. 8 zeigt schematisch z.B. eine Überwurfmutter 14, die am Lenkkopf 4 befestigt wird und an der der Reflektorkörper 12' verdrehbar angebracht ist. Hierdurch kann der Reflektor 12 ohne Verdrehung des Lenkers zur Ermittlung der Längsabmessung A um die Lenkkopfachse 3 verdreht werden. Die Verbindung zwischen Reflektorkörper 12' und Überwurfmutter 14 kann beispielsweise als Steckverbindung ausgebildet sein, so daß die Überwurfmutter 14 von dem Reflektorkörper 12 abgenommen und dafür ein Bauteil über eine Steckverbindung so angesetzt werden kann, daß der Reflektorkörper nicht verdrehbar mit dem ähnlich einer Überwurfmutter gestalteten Bauteil verbunden wird, das auf dem Lenkkopf befestigt wird. Der Reflektorkörper 12' kann an der Überwurfmutter 14 auch feststellbar angebracht werden. In diesem Falle kann der Reflektorkörper 12' nur über den Lenker des Motorrads zur Ermittlung des Sturzwinkels β um die Lenkkopfachse 3 verdreht werden.

Der Reflektor 12 selbst kann beispielsweise an dem in Fig. 8 wiedergegebenen Reflektorkörper 12' in der Form eines Rundstabs durch eine Abflachung ausgebildet werden, die sich über einen Abschnitt des Rundstabs erstreckt. Bei dieser Ausgestaltung hat der Reflektor 12 eine gewisse Längsabmessung entsprechend der Länge der Abflachung an dem Rundstab. Die Abflachung ist so angebracht, daß die Lenkkopfachse 3 in der Ebene des Reflektors 12 liegt, wenn die Überwurfmutter 14 am Lenkkopf befestigt wird. Es ist auch möglich, einen kleinflächigen Reflektor 12 beispielsweise mittels einer Teleskopstange höhenverstellbar an einem Aufsatzteil 13 anzubringen.

Vorzugsweise werden Anschläge für die Drehstellung des Reflektorkörpers 12' am Aufsatzteil 13 vorgesehen, so daß der Reflektor 12 von der Mittel- bzw. Nullstellung aus jeweils um 30° nach links und rechts bis zu den Anschlägen verschwenkt werden kann. Bei 15 ist eine Skala an der Überwurfmutter 14 für die Angabe der Drehstellung des Reflektors 12 angedeutet.

Die Reflektoren 9 und 9' am Bügel sind zur Anpassung an die Geometrie eines vorgegebenen Rahmens vorzugsweise auch in Querrichtung verstellbar, damit der Abstand vom mittigen Lasergerät 8 einstellbar ist. Hierfür kann eine Maßskala und/oder eine elektronische Abstandsmessung mittels Sensoren vorgesehen werden.

Das Lasergerät 8 selbst ist am Querbalken 11 des Bügels 7 seitlich verstellbar angebracht, wie durch Pfeile in Fig. 3 angegeben, um die Auslenkung der Symmetrieebene 5 (Maß x in Fig. 7) zu ermitteln. Das Lasergerät 8 kann auch in der senkrechten Richtung am Bügel 7 verstellbar angebracht werden, um das Lasergerät in der Schwenkstellung des Bügels nach Fig. 4 auf die Ebene des Reflektors 12 am Lenkkopf ausrichten zu können.

Schließlich kann das Lasergerät 8 am Bügel 7 auch in der Symmetrieebene 5 nach hinten verschwenkbar angebracht werden, wie durch einen Pfeil in Fig. 3 angedeutet, damit auch der hinter der Schwingenachse 2 liegende Teil des Rahmens 1 (Fig. 1 und 2) vermessen werden kann. Hierbei können mittels des Lasersgeräts 8 Bezugspunkte am hinteren Teil des Rahmens angepeilt und die Übereinstimmung mit vorgegebenen Bezugspunkten festgestellt werden.

Anstelle eines verschwenkbaren Lasergeräts 8 kann auch auf der Rückseite des Bügels 7 ein zusätzliches Lasergerät für diesen Zweck vorgesehen werden.

Es ist offensichtlich, daß für die Dreiecksvermessung zur Ermittlung der Abmessungen A, B und C das Lasergerät 8 auch an der Stelle eines der Reflektoren 9,9' oder 12 positioniert sein kann, während an der Stelle des Lasergeräts 8 in Fig. 1 und 2 ein Reflektor vorgesehen wird. Insbesondere kann die Anordnung von Lasergerät 8 und Reflektor 12 am Lenkkopf vertauscht werden.

Fig . 9 zeigt ein am Bügel 7 angebrachtes Zusatzgerät in Form einer horizontal liegenden Führungsschiene 16 mit einem darauf verstellbar angebrachten optischen Aufzeichnungsgerät 17, beispielsweise einem Lasergerät mit Reflektor oder einer CCD-Kamera. Die Führungsschiene 16 kann beispielsweise mittels eines Spindeltriebs oder dergleichen über die Höhe des Schenkels 10 des Bügels 7 verstellt werden, während das optische Aufzeichnungsgerät 17 über die Länge der Führungsschiene verfahrbar ist. Diese Verstellvorgänge erfolgen vorzugsweise über eine nicht dargestellte Antriebseinrichtung. Die Höhenverstellung der Führungsschiene 16 kann zum Beispiel mittels einer am Bügel angebrachten Zahnleiste und einem Ritzel an der Führungsschiene 16 oder umgekehrt erfolgen.

Mittels dieses Zusatzgerätes kann ein zweidimensionales Bild der Seitenansicht des Rahmens 1 aufgezeichnet werden, das in einer nicht dargestellten Datenverarbeitungseinrichtung abgespeichert wird und auf einem nicht dargestellten Monitor wiedergegeben werden kann. Durch Speicherung eines korrekt ausgerichteten bzw. fabrikneuen Rahmens in Form von Bilddaten kann bei der Aufzeichnung des Bildes eines Unfallrahmens dieser mit dem Bezugsrahmen verglichen und auf einem Monitor dargestellt werden, um unabhängig von der Ausrichtung der Achsen 2 und 3 zueinander auch jene Teile des Rahmens 1 optisch wiederzugeben, die gegenüber dem Bezugsrahmen verformt sind. Hierdurch erhält der Bearbeiter bzw. Ausrichter einen Hinweis darauf, wie er die Verformungskraft zum Ausrichten des Rahmens ansetzen soll.

Die Führungsschiene 16 erstreckt sich auch über die Länge des hinteren Rahmenteils, damit auch von diesem ein zweidimensionales Bild aufgenommen werden kann.

Es ist auch möglich, eine horizontal und eine senkrecht verlaufende Führungsschiene bzw. Gewindespindel mit darauf verschiebbarem optischem Aufzeichnungsgerät vorzusehen, die entsprechend einem zweidimensionalen Koordinatensystem die Bilddaten der Seitenansicht des Rahmens aufzeichnen können.

Fig. 10 und 11 zeigen eine andere Ausführungsform der Vorrichtung, wobei am Bügel 7 lediglich in der Mitte ein Lasergerät 8 und am Lenkkopf 4 ein Reflektor 30 so angebracht ist, daß die in Fig. 10 senkrecht zur Zeichenebene liegende Reflektorebene einen Winkel α zu der Lenkkopfachse 3 hat. Der Reflektor 30 wird über ein Aufsatzteil derart am Lenkkopf 4 fest angebracht, daß der Reflektor 30 nur durch den Lenker des Motorrads verschwenkt werden kann. Der Reflektor 30 kann an dem in Fig. 10 im einzelnen nicht dargestellten Aufsatzteil fest angebracht sein, so daß seine Reflektorebene einen unveränderlichen Winkel α zur Lenkkopfachse 3 einnimmt, die mit der Längsachse des Aufsatzteils zusammenfällt, wenn das Aufsatzteil auf den Lenkkopf 4 z.B. aufgeschraubt wird. Es ist aber auch möglich, den Reflektor 30 in der Neigung zur Lenkkopfachse 3 verstellbar am Aufsatzteil anzubringen, wobei eine Maßskala und/oder ein Sensor vorgesehen wird, um den Winkel α relativ zur Lenkkopfachse 3 festzulegen. Der Winkel α ist somit bekannt bzw. vorgegeben.

Das Lasergerät 8 am Bügel 7 ist senkrecht zur Zeichenebene in Fig. 10 verschwenkbar angebracht, wie sich aus der schematischen Darstellung in Fig. 11 ergibt. Seitlich in einem Abstand E voneinander sind an dem Bügel 7 Markierungen 31 und 32 mit einer Maßskala angebracht, wobei das Lasergerät 8 in der Mitte liegt. Anstelle der Maßskala 31, 32 kann auch ein höhenverstellbarer Reflektor mit Sensor vorgesehen werden, entsprechend den Reflektoren 9 und 9' der Ausführungsform nach den Fig. 1 bis 7.

Zur Ermittlung des Lenkkopfwinkels I in Fig. 10 wird zunächst der Bügel 7 um die Schwingenachse 2 so verschwenkt, daß bei gleichzeitiger Verdrehung des Lasergeräts 8 um eine senkrecht zur Zeichenebene in Fig. 10 liegende Achse der vom Lasergerät 8 ausgesandte Lichtstrahl 33 so auf den Reflektor 30 trifft, daß der Lichtstrahl unmittelbar zurück zum Lasergerät 8 reflektiert wird, wie durch einen Doppelpfeil in Fig. 10 am Strahl 33 wiedergegeben. Hierdurch ergibt sich ein rechter Winkel zwischen Strahl 33 und Reflexionsebene des Reflektors 30.

Bei 40 ist in Fig. 10 eine Ebene des Lasergeräts 8 angedeutet, die senkrecht zu dem ausgesandten Lichtstrahl 33 liegt. Bei Reflexion des Lichtstrahls 33 vom Reflektor 30 zurück zum Lasergerät 8 liegt die Ebene 40 parallel zur Reflexionsebene des Reflektors 30. Daraus ergibt sich, daß die Verbindungslinie 34 zwischen Schwingenachse 2 und Lasergerät 8 parallel zur Lenkkopfachse 3 liegt und damit der ablesbare Winkel γ zwischen Lichtstrahl 33 und Verbindungslinie 34 dem in dem so gebildeten Parallelogramm aus den Linien 33, 35 und 3,34 gegenüberliegenden Winkel γ' entspricht. Legt man eine Senkrechte 39 vom Austrittspunkt der Lenkkopfachse 3 an der Unterseite des Lenkkopfs 4 auf die durch die Schwingenachse 2 verlaufende Linie 35, die parallel zum Lichtstrahl 33 liegt, so ergibt sich daraus der Lenkkopfwinkel I.

Die Abmessung D zwischen Schwingenachse 2 und Lasergerät 8 ist vorgegeben und entspricht dem Radius, mit dem das Lasergerät 8 beim Verschwenken des Bügels 7 um die Schwingenachse 2 längs einem Kreisbogen verschwenkt wird. Diese vorgegebene Abmessung D wird aber für die Ermittlung des Lenkkopfwinkels I nicht benötigt.

Der Winkel γ zwischen dem Strahl 33 und der Verbindungslinie 34 kann an einer Maßskala abgelesen und/oder durch einen Drehsensor am Lasergerät 8 ermittelt werden.

Zur Messung des Sturzwinkels β zwischen der Symmetrieebene 5 und der Lenkkopfachse 3 in Fig. 11 wird der Reflektor 30 mittels des Lenkers nach beiden Seiten verschwenkt, wobei der Reflektor 30 aufgrund des Winkels α zur Lenkkopfachse 3 in Fig. 10 auf einem Kreisbogen bewegt wird, wie in Fig. 11 durch einen Doppelpfeil angedeutet. In der in Fig. 11 linken Schwenkstellung des Reflektors 30 ist es erforderlich, das Lasergerät 8 so um seine der Verbindungslinie 34 in Fig. 10 entsprechende Achse zu verschwenken, daß der Lichtstrahl 33' in Fig. 11 den Reflektor 30 trifft und der reflektierte Strahl 36 auf die seitlich am Bügel 7 angebrachte Markierung 31 bzw. einen entsprechenden Reflektor trifft.
Beim Verschwenken des Reflektors 30 mittels des Lenkers beschreibt der reflektierte Strahl 36 am Bügel 7 eine Kreisbogenlinie 37. In entsprechender Weise wird der Reflektor 30 nach rechts in Fig. 11 verschwenkt, unter entsprechender Einstellung des Lasergeräts 8, damit der Lichtstrahl 33'' vom Lasergerät auf die gegenüberliegende Markierung 32 durch den Strahl 36' reflektiert wird. Durch Ablesen der Auftreffstelle der reflektierten Strahlen 36, 36' an den Markierungen 31 und 32 kann der Abstand c bzw. d der Auftreffstelle des reflektierten Strahles von der Horizontalen durch das Lasergerät 8 gemessen werden.

Sind die Abstände c und d gleich, so liegt ein Sturzwinkel β von 0° vor. Entsprechend kann aus einer Differenz der Abmessungen c und d der Sturzwinkel β in einfacher Weise aus dieser Differenz ermittelt werden.

Für die Vermessung der Symmetrieebene 5 kann in der gleichen Weise vorgegangen werden wie anhand von Fig. 7 dargelegt. Der Reflektor 30 kann in einer Null- bzw. Mittelstellung festgelegt und mit einem Fadenkreuz bzw. einer Mittellinie versehen werden. Trifft der vom Lasergerät 8 ausgesandte Lichtstrahl 33 in Fig. 11 den Reflektor 30 nicht derart, daß der Strahl direkt zum Lasergerät 8 zurück reflektiert wird, so kann durch eine seitliche Verschiebung des Lasergeräts 8 der Versatz x (Fig. 7) der Symmetrieebene 5 gemessen werden.

Ebenso ist es möglich, anstelle einer seitlichen Verschiebung des Lasergeräts 8 zur Ermittlung des Versatzes x das Lasergerät 8 so zu verschwenken, daß der Lichtstrahl 33 auf den Reflektor 30 in der Null- bzw. Mittelstellung trifft, wodurch am Lasergerät 8 der entsprechende Verdrehwinkel und damit der Versatz der Symmetrieebene 5 abgelesen werden kann.

Durch die anhand der Fig. 10 und 11 beschriebene Vorrichtung wird eine weitere Vereinfachung dadurch erzielt, daß lediglich ein lichtemittierendes Gerät 8 und ein Reflektor 30 für eine vollständige Vermessung des Rahmens 1 benötigt werden.

Nach einer weiteren Abwandlung der Vorrichtung nach den Fig. 10 und 11 kann zusätzlich zu dem Reflektor 30 ein am Aufsatzteil angebrachter Reflektor 12 vorgesehen werden, bei dem die Lenkkopfachse 3 in der Reflektionsebene liegt, wie dies anhand der Fig. 1 bis 7 erläutert wurde. Der Reflektor 12 kann hierbei fest am Aufsatzteil angebracht sein, so daß er nur über den Lenker des Motorrads um die Lenkkopfachse 3 verdreht werden kann.

In der Null-bzw. Mittelstellung, in der die beiden Reflektoren 12 und 30 hintereinander in der Symmetrieebene 5 liegen, wird gegenüber einem vom Lasergerät 8 ausgesandten Lichtstrahl 33 der Reflektor 30 vom Reflektor 12 abgedeckt, während bei einer Verdrehung des Lenkers des Motorrads um die Lenkkopfachse 3 der Reflektor 30 auf einer Kreisbahn (Fig. 11) bewegt wird. Hierdurch kann ein Versatz der Symmetrieebene 5 dadurch ermittelt werden, daß der Lenker soweit verschwenkt wird, daß der Lichtstrahl 33 auf den entsprechend verschwenkten Reflektor 30 trifft. Bei dieser Ausgestaltung bedarf es keiner weiteren Verstellung oder einer Verschwenkung des Lasergeräts 8.

Die beschriebenen Vorrichtungen können auch bei einem Fahrradrahmen angewendet werden, wobei der Bügel 7 am Tretkurbellager des Fahrradrahmens zentriert wird.

Die beschriebenen Vorrichtungen können ohne Datenverarbeitungseinrichtung für die Vermessung verwendet werden, indem die jeweiligen Winkel und Abmessungen an Maßskalen abgelesen und in eine vorgegebene Formel zur Ermittlung der jeweiligen Werte eingesetzt werden. Vorzugsweise werden an den einzelnen Meßelementen wie Lasergerät 8 und Reflektor 30 bzw. 12 und 9 Sensoren vorgesehen, die mit einer nicht dargestellten Datenverarbeitungseinrichtung verbunden sind, die die empfangenen Signale speichert und verarbeitet, sodaß beispielsweise an einem Monitor unmittelbar die wesentlichen Meßergebnisse für die Rahmenvermessung angezeigt werden können.

Zum Verschwenken des Lasers 8 bzw. des Reflektors 12 können Winkelmesser mit einer Rastung in bestimmten Winkelabständen bis beispielsweise 30 oder 35° vorgesehen werden. Zweckmäßigerweise werden elektrische Drehgeber vorgesehen, die in sehr kleinen Winkelabständen Impulse abgeben können und auch eine geringe Baugröße haben.

Anstelle einer Höhenverstellung des Reflektors 12, 30 am Lenkkopf 4 beispielsweise mittels einer Teleskopstange kann auch das Lasergerät 8 am Bügel höhenverstellbar ausgebildet werden, während der Reflektor 12 fest angeordnet sein kann.

## Patentansprüche

1. Vorrichtung zum Vermessen eines Zweiradrahmens, insbesondere eines Motorradrahmens, umfassend
einen am Lenkkopf (4) anbringbaren Reflektor (12), der wahlweise unabhängig vom Lenker um die Lenkkopfachse (3) verschwenkbar und mit dem Lenker verschwenkbar ist,
und einen an der Schwingenaufnahme (6) des Rahmens (1) zentrierbaren U-förmigen Bügel (7), an dessen Querbalken in der Mitte ein lichtemittierendes Gerät (8), vorzugsweise ein Lasergerät, und in einem Abstand auf beiden Seiten jeweils ein Reflektor (9,9') angebracht ist, der in der Höhe verstellbar ist.

2. Vorrichtung nach Anspruch 1,
wobei das Lasergerät (8) am Bügel (7) in Querrichtung verstellbar ist.

3. Vorrichtung nach Anspruch 1,
wobei das Lasergerät 8, die Reflektoren (9, 9') am Bügel (7) und die Schwingenachse (2) in einer Ebene liegen.

4. Vorrichtung nach Anspruch 1,
wobei der Reflektor (12) am Lenkkopf (4) mit einem Fadenkreuz oder einer Mittellinie versehen ist, die mit der Lenkkopfachse (3) zusammenfällt.

5. Vorrichtung nach einem der vorhergehenden Ansprüche,
wobei der Reflektor (12) an einem Aufsatzteil (13) am Lenkkopf (4) verschwenkbar und so festlegbar angebracht werden kann, daß der Reflektor (12) nur mit dem Lenker des Motorrads verschwenkbar ist.

6. Vorrichtung nach Anspruch 1,
wobei der Reflektor (12) durch eine Abflachung an einem Rundstab ausgebildet ist und sich die Abflachung über einen Abschnitt des Rundstabs erstreckt.

7. Vorrichtung nach Anspruch 1,
wobei der Reflektor (12) über eine Teleskopstange am Aufsatzteil (13) in Richtung der Lenkkopfachse (3) verstellbar ist.

8. Vorrichtung nach Anspruch 5,
wobei an dem Aufsatzteil (13) eine Maßskala (15) für die Drehstellung des Reflektors (12) vorgesehen ist.

9. Vorrichtung nach Anspruch 5,
wobei an dem Aufsatzteil (13) Anschläge für die maximale Drehstellung des Reflektors (12) vorgesehen sind.

10. Vorrichtung nach Anspruch 1,
wobei das Lasergerät (8) auf die Rückseite des Bügels (7) verstellbar oder auf der Rückseite des Bügels ein zusätzliches Lasergerät angebracht ist.

11. Vorrichtung nach den vorhergehenden Ansprüchen,
wobei an dem Bügel (7) ein Zusatzgerät in Form einer horizontal verlaufenden Führungsschiene (16) mit einem darauf verstellbaren Aufzeichnungsgerät (17) derart verstellbar angebracht ist, daß ein zweidimensionales Bild des Rahmens (1) aufgezeichnet werden kann, das mit einer Datenverarbeitungseinrichtung mit einem Speicher für die Bilddaten verbunden ist, in der auch ein Bild eines korrekten Rahmens gespeichert ist, wobei ein Vergleich der aufgenommenen und gespeicherten Bilddaten auf einem Monitor wiedergegeben werden kann.

12. Verfahren zum Vermessen eines Zweiradrahmens, insbesondere eines Motorradrahmens, wobei mittels eines mittig an einem U-förmigen, an der Schwingenaufnahme zu zentrierenden Bügel angebrachten lichtemittierenden Gerätes (8) und auf dessen beiden Seiten in einem Abstand davon angebrachten Reflektoren (9,9') sowie einem am Lenkkopf (4) anbringbaren Reflektor (12) eine Dreiecksvermessung zur Ermittlung des Abstandes (A') zwischen lichtemittlierendem Gerät (8) und Reflektor (12) bzw. des Winkels zwischen den Strahlengängen vorgenommen wird und daraus die wesentlichen Abmessungen der Rahmengeometrie errechnet werden.

13. Vorrichtung zum Vermessen eines Zweiradrahmens, insbesondere eines Motorradrahmens, umfassend
einen am Lenkkopf (4) anbringbaren Reflektor (30), dessen Reflexionsebene in einem Winkel (α) zur Lenkkopfachse (3) liegt, und einen an der Schwingenaufnahme des Rahmens (1) zentrierbaren U-förmigen Bügel (7), an dessen Querbalken in der Mitte ein lichtemittierendes Gerät (8), vorzugsweise ein Lasergerät, verstellbar angebracht ist, wobei der Reflektor (30) am Lenkkopf (4) mit Markierungen und/oder Reflektoren (31,32) zusammenwirkt, die beiderseits des Lasergeräts (8) am Bügel (7) angebracht sind.

14. Vorrichtung nach Anspruch 13,
wobei der Winkel (α) des Reflektors (30) zur Lenkkopfachse (3) durch ein Aufsatzteil vorgegeben ist, dessen Achse mit der Lenkkopfachse zusammenfällt und an dem der Reflektor (30) in einem vorgegebenen Winkel fest angebracht ist.

15. Vorrichtung nach Anspruch 13,
wobei der Reflektor (30) verstellbar an einem Aufsatzteil angebracht ist, dessen Achse mit der Lenkkopfachse (3) zusammenfällt und an dem ein Winkelmesser und/oder ein Drehsensor zur Ermittlung des einstellbaren Winkels (α) des Reflektors (30) zur Lenkkopfachse (3) ablesbar ist.

16. Vorrichtung nach Anspruch 13,
wobei das Lasergerät (8) am Bügel (7) verschwenkbar angebracht ist.

17. Vorrichtung nach Anspruch 14 oder 15,
wobei an dem Aufsatzteil zusätzlich ein Reflektor (12) drehfest angebracht ist, in dessen Reflexionsebene die Lenkkopfachse (3) liegt.

18. Vorrichtung nach einem der vorhergehenden Ansprüche,
wobei die Meßelemente (8,9,12,30) über Sensoren mit einer Datenverarbeitungseinrichtung verbunden sind, welche die Geometrie des Rahmens (1) aus den ermittelten Signalen errechnet.

19. Verfahren zum Vermessen eines Zweiradrahmens, insbesondere eines Motorradrahmens, wobei mittels eines mittig an einem U-förmigen, an der Schwingenaufnahme zu zentrierenden Bügel angebrachten, lichtemittierenden Gerätes (8) und auf dessen beiden Seiten in einem Abstand angebrachten Markierungen (31,32) sowie einem am Lenkkopf (4) anbringbaren Reflektor (30), der in einem Winkel (α) von der Lenkkopfachse (3) angeordnet ist, eine Parallelogrammvermessung zur Ermittlung des Lenkkopfwinkels (I) vorgenommen sowie durch Verschwenken des Lenkers mit dem daran befestigten Reflektor (30) der Sturzwinkel (β) ermittelt wird.

## Claims

1. Device for measuring a two-wheel frame, in particular a motorcycle frame, comprising a reflector (12) which can be mounted at the headset (4) and is optionally pivotable independent of the handlebar around the headset axis (3) and pivotable with the handlebar,
and a U-shaped bracket (7) which can be centred at the rocker holder (6) of the frame (1), wherein in the middle of the bracket crossbar a light-emitting device (8), preferably a laser device, is mounted, and at a distance on each of the two sides a reflector (9, 9') is mounted, the height of which can be adjusted.

2. Device according to claim 1,
wherein the laser device (8) at the bracket (7) is displaceable in the transverse direction.

3. Device according to claim 1,
wherein the laser device (8), the reflectors (9, 9') at the bracket (7) and the rocker axis (2) lie in one plane.

4. Device according to claim 1,
wherein the reflector (12) is provided at the headset (4) with crosshairs or a centre line which coincides with the headset axis (3).

5. Device according to one of the preceding claims,
wherein the reflector (12) can be mounted at a top piece (13) at the headset (4) pivotably and fixably such that the reflector (12) is pivotable only with the handlebar of the motorcycle.

6. Device according to claim 1,
wherein the reflector (12) is formed by a flat portion at a round rod and the flat portion extends over a portion of the round rod.

7. Device according to claim 1,
wherein the reflector (12) is displaceable by means of a telescope rod at the top piece (13) in the direction of the headset axis (3).

8. Device according to claim 5,
wherein a measuring scale (15) is provided at the top piece (13) for the position of rotation of the reflector (12).

9. Device according to claim 5,
wherein stops for the maximum position of rotation of the reflector (12) are provided on the top piece (13).

10. Device according to claim 1,
wherein the laser device (8) is mounted displaceably on the rear side of the bracket (7) or an additional laser device is mounted on the rear side of the bracket.

11. Device according to one of the preceding claims,
wherein an additional device in the form of a horizontally extending guide rail (16), having displaceably thereon a recording device (17), is mounted displaceably at the bracket (7) such that a two-dimensional picture of the frame (1) can be recorded, the picture being connected to a data processing means having a memory for the picture data, in which data processing means a picture of a correct frame is also stored, wherein a comparison of the picture data recorded and those stored can be displayed on a monitor.

12. Method for measuring a two-wheel frame, in particular a motorcycle frame, wherein by means of a light-emitting device (8) centrally mounted on a U-shaped bracket to be centred at the rocker holder, reflectors (9, 9') mounted on the two sides of the device at a distance therefrom, and a reflector (12) which can be mounted at the headset (4), a triangular measurement is carried out for determining the distance (A') between the light-emitting device (8) and the reflector (12) or the angle between the paths of the rays, and the essential measurements of the frame geometry are calculated from this.

13. Method for measuring a two-wheel frame, in particular a motorcycle frame, comprising
a reflector (30) which can be mounted at the headset (4) and whose plane of reflection is at an angle (α) to the headset axis (3), and a U-shaped bracket (7) which can be centred at the rocker holder of the frame (1), wherein in the middle of the bracket crossbar a light-emitting device (8), preferably a laser device, is displaceably mounted,
wherein the reflector (30) at the headset (4) cooperates with markings and/or reflectors (31, 32) which are mounted on both sides of the laser device (8) at the bracket (7).

14. Device according to claim 13,
wherein the angle (α) of the reflector (30) to the headset axis (3) is pre-set by a top piece whose axis coincides with the headset axis, at which top piece the reflector (30) is fixedly mounted at a pre-set angle.

15. Device according to claim 13,
wherein the reflector (30) is displaceably mounted at a top piece whose axis coincides with the headset axis (3), at which top piece a goniometer and/or a rotation sensor for determining the adjustable angle (α) of the reflector (30) to the headset axis (3) can be read.

16. Device according to claim 13,
wherein the laser device (8) is pivotably mounted at the bracket (7).

17. Device according to claim 14 or 15,
wherein additionally there is fixedly mounted at the top piece a reflector (12), in whose plane of reflection the headset axis (3) lies.

18. Device according to one of the preceding claims,
wherein the measuring elements (8, 9, 12, 30) are connected by means of sensors to a data processing means which calculates the geometry of the frame (1) from the detected signals.

19. Method for measuring a two-wheel frame, in particular a motorcycle frame, wherein by means of a light-emitting device (8) mounted centrally on a U-shaped bracket to be centred at the rocker holder, markings (31, 32) mounted on both sides of the light-emitting device (8) at a distance therefrom, and a reflector (30) which can be mounted at the headset (4) and which is arranged at an angle (α) to the headset axis (3), a parallelogram measurement is carried out for determining the headset angle (I) and the dive angle (β) is determined by pivoting the handlebar with the reflector (30) fixed thereon.

## Revendications

1. Dispositif pour mesurer le cadre d'un véhicule à deux roues, notamment le cadre d'une motocyclette, comprenant un réflecteur (12) à monter sur le tube de direction (4) et, au choix, pivotant autour de l'axe (3) du tube de direction, indépendamment du guidon, ou pivotant ensemble avec le guidon, et un étrier en forme d'un U (7) pouvant être centré sur le logement de bielle oscillante (6) du cadre (1) et dont la traverse porte, au milieu, un appareil émetteur de lumière (8), de préférence un appareil laser, ainsi que, monté des deux côtés de celui-ci, à une certaine distance, un réflecteur respectif (9, 9') qui peut être réglé en hauteur.

2. Dispositif selon la revendication 1, dans lequel l'appareil laser (8) est réglable en direction transversale, sur l'étrier (7).

3. Dispositif selon la revendication 1, dans lequel l'appareil laser (8), les réflecteurs (9, 9') montés sur l'étrier (7) et l'axe (2) de bielle oscillante se trouvent situés dans le même plan.

4. Dispositif selon la revendication 1, dans lequel le réflecteur (12) monté sur le tube de direction (4) est muni d'un réticule ou d'une ligne médiane coïncidant avec l'axe (3) du tube de direction.

5. Dispositif selon l'une quelconque des revendications préalables, dans lequel le réflecteur (12) est monté de façon à pouvoir pivoter et à pouvoir être arrêté sur une pièce rapportée (13) sur le tube de direction (4) de manière à ce que le réflecteur (12) ne peut être pivoté qu'ensemble avec le guidon de la motocyclette.

6. Dispositif selon la revendication 1, dans lequel le réflecteur (12) est formé par un plat prévu sur une barre ronde, le plat s'étendant sur une section de la barre ronde.

7. Dispositif selon la revendication 1, dans lequel le réflecteur (12) est monté sur la pièce rapportée (13) de façon réglable vers l'axe (3) du tube de direction.

8. Dispositif selon la revendication 5, dans lequel un cadran de mesure (15) de la position en rotation du réflecteur (12) est prévu sur la pièce rapportée (13).

9. Dispositif selon la revendication 5, dans lequel des butées définissant la position extrême en rotation du réflecteur (12) sont prévu sur la pièce rapportée (13).

10. Dispositif selon la revendication 1, dans lequel l'appareil laser (8) peut changer de position pour être monté sur le derrière de l'étrier (7) ou qu'un appareil laser supplémentaire est prévu sur le derrière de l'étrier.

11. Dispositif selon l'une quelconque des revendications préalables, dans lequel un appareil supplémentaire en forme d'une glissière de guidage (16) portant un appareil d'enregistrement déplaçable sur celui-ci est monté sur l'étrier (7) de façon réglable de manière qu'un image bidimensionnel du cadre (1) puisse être enregistré, l'appareil supplémentaire étant connecté à un dispositif de traitement de données comportant une mémoire pour les données image qui contient mémorisé également un image d'un cadre correct, une comparaison des données image enregistrées avec celles mémorisées pouvant être reproduite sur un moniteur.

12. Procédé pour mesurer le cadre d'un véhicule à deux roues, notamment le cadre d'une motocyclette, dans lequel un mesurage en triangle, effectué au moyen d'un appareil émetteur de lumière (8) monté de façon centrée sur un étrier en forme d'un U (7) à être centré sur le logement de bielle oscillante, et de réflecteurs (9, 9') montés des deux côtés de celui-ci, à une certaine distance, ainsi que d'un réflecteur (12) à monter sur le tube de direction (4), est réalisé pour déterminer la distance (A') entre l'appareil émetteur de lumière (8) et le réflecteur (12) ou l'angle formé par les marches des rayons, et à base de cela les dimensions essentielles de la géométrie du cadre sont calculées.

13. Dispositif pour mesurer le cadre d'un véhicule à deux roues, notamment le cadre d'une motocyclette, comprenant un réflecteur (30) à monter sur le tube de direction (4), dont le plan refléchissant forme un angle (α) par rapport à l'axe (3) du tube de direction, et un étrier en forme d'un U (7) pouvant être centré sur le logement de bielle oscillante du cadre (1) et dont la traverse porte, au milieu, un appareil émetteur de lumière (8), de préférence un appareil laser, déplaçable sur celle-ci, le réflecteur (30) monté sur le tube de direction (4) coopérant avec des repères et/ou des réflecteurs (31, 32) montés sur l'étrier (7) respectivement sur les deux côtés de l'appareil laser (8).

14. Dispositif selon la revendication 13, dans lequel l'angle (α) que le réflecteur (30) forme par rapport à l'axe de tube de direction (3) est prédéterminé par une pièce rapportée dont l'axe coïncide avec l'axe du tube de direction et sur laquelle le réflecteur (30) est immobilisé à un angle prédéterminé.

15. Dispositif selon la revendication 13, dans lequel le réflecteur (30) est monté de façon réglable sur une pièce rapportée dont l'axe coïncide avec l'axe de tube de direction (3) et qui porte un goniomètre et/ou un capteur de rotation pour la détection de l'angle (α) réglable du réflecteur (30) par rapport à l'axe de tube de direction (3).

16. Dispositif selon la revendication 13, dans lequel l'appareil laser (8) est monté pivotant sur l'étrier (7).

17. Dispositif selon les revendications 14 ou 15, dans lequel un réflecteur (12) supplémentaire est monté de façon non pivotant sur la pièce rapportée, dans le plan refléchissant duquel s'étend l'axe de tube de direction (3).

18. Dispositif selon l'une quelconque des revendications préalables, dans lequel les éléments de mesure (8, 9, 12, 30) sont reliés, par l'intermédiaire de capteurs, à un dispositif de traitement de données calculant la géométrie du cadre (1) à base des signaux délivrés.

19. Procédé pour mesurer le cadre d'un véhicule à deux roues, notamment le cadre d'une motocyclette, dans lequel un mesurage en parallélogramme est effectué au moyen d'un appareil émetteur de lumière (8) monté de façon centrée sur un étrier en forme d'un U à être centré sur le logement de bielle oscillante, et des repères (31, 32) prévus aux deux côtés de celui-là, à une certaine distance, ainsi que d'un réflecteur (30) à monter sur le tube de direction (4), qui est disposé de façon à former un angle (α) par rapport à l'axe de tube de direction (3), afin de déterminer l'angle (I), et dans lequel l'angle de piqué (β) est déterminé en pivotant le guidon avec le réflecteur (30) y fixé.
